# EUROPÄISCHE PATENTSCHRIFT

(11) **EP 0 567 933 B1**
(45) Veröffentlichungstag und Bekanntmachung des Hinweises auf die Patenterteilung: **13.08.1997**
(21) Anmeldenummer: 93106579.1
(22) Anmeldetag: 22.04.1993
(51) Int. Cl.: G11B 15/29, G11B 15/665

(54) **Bandandruckrollen-Betätigungsvorrichtung**
Tape pinch wheel applying device
Disposition pour appliquer un galet presseur

(30) Priorität: 30.04.1992 DE 4214270
(43) Veröffentlichungstag der Anmeldung: 03.11.1993
(73) Patentinhaber: DEUTSCHE THOMSON-BRANDT GMBH, 78048 Villingen-Schwenningen (DE)
(72) Erfinder: Weisser, Fritz, W-7742 St. Georgen (DE); Lauble, Erhard, W-7742 St. Georgen (DE)

(56) Entgegenhaltungen:
- EP-A- 0 192 448
- EP-A- 0 228 571
- EP-A- 0 310 114
- PATENT ABSTRACTS OF JAPAN, Bd. 13, Nr. 108 (P-843)(3456) 15. März 1989 & JP-A-63 285 751

## Beschreibung

Die Erfindung betrifft eine Betätigungsvorrichtung für eine Bandandruckrolle in und außer Eingriff mit einer Capstanwelle in einem Recorder zur Informationaufzeichnung und/oder -wiedergabe nach dem Oberbegriff des Anspruchs 1.

Um bei Recordern zur Informationsaufzeichnung und/oder -wiedergabe mit einem bandförmigen Aufzeichnungsträger den erforderlichen Bandtransport zu gewährleisten, wird derselbe bekanntlich durch die Andruckrolle an die mit konstanter Geschwindigkeit sich drehende Capstanwelle gedrück, so daß derselbe mit gleichbleibender Geschwindigkeit angetrieben wird und dadurch am Aufzeichnungs- und/oder Wiedergabeköpfen vorbeigleiten kann.

Bei handelsüblichen Recordern, wie z.B. Video-Recordern, bei denen der Aufzeichnungsträger in einer Kassette gelagert ist, ist es üblich die Capstanwelle so anzuordnen, daß beim Einlegen einer Kassette die Capstanwelle in eine bzw. am äußerem Umfang der Kassette vorgesehene Aussparung eintaucht. Innerhalb der Kassette vorgesehene Bandführungen gewährleisten, daß dabei der Aufzeichnungsträger vor der Capstanwelle verläuft. Diese Anordnung der Capstanwelle hat den Vorteil, daß das An- bzw. Abschwenken der Andruckrolle an die Capstanwelle durch eine konstruktiv relativ einfache Betätigungsvorrichtung realisierbar ist.

Es hat sich jedoch gezeigt, daß bei Recordern nach dem Helical-Scan-Verfahren eine derartige Anordnung der Capstanwelle insbesondere für den Suchlaufbetrieb "rückwärts" nicht optimal ist. Bei neueren Recordern, die nach dem vorgenannten Verfahren arbeiten, ist daher die Capstanwelle am Laufwerkchassis außerhalb des für die Kassette vorgesehenen Bereiches angeordnet. Daß bedeutet, daß die Andruckrolle durch ein Anschwenken im Prinzip entgegen der zuvor angedeuteten Richtung mit der Capstanwelle in Eingriff gebracht werden muß. Mit einer derartig angeordneten Capstanwelle ist aber auch ein relativ großer steuerungs- und/oder konstruktiver Aufwand zum Betätigen der Andruckrolle verbunden.

So wird z.B. bei einem Videorecorder mit der Typbezeichnung "Cityline" der Fa. Matsushita die Andruckrolle mit der Capstanwelle in Eingriff gebracht, indem, nach dem Ausfädeln des Aufzeichnungsträgers aus der eingelegten Kassette, die Andruckrolle mit Hilfe eines Fahrstuhls zunächst zwischen Kassette und Aufzeichnungsträger gebracht und anschließend auf die Capstanwelle zubewegt wird. Bei einem anderen Recorder mit der Typbezeichnung "VR 6760" der Fa. Grundig wird die in der Kassette für das aufwickelseitige Fädelelement des Laufwerkes vorgesehene Aussparung für die Ruhestellung der Andruckrolle genutzt, indem das Fädelelement zusammen mit der Andruckrolle in der Aussparung der eingelegten Kassette untergebracht werden. Zum Eingriff mit der Capstanwelle wird nach dem Ausfädeln des Aufzeichnungsträgers die Andruckrolle mittels einer Zahnstange auf die Capstanwelle zubewegt und mit Hilfe einer an der Lagerwelle der Andruckrolle angreifenden Gabel an die Capstanwelle gedrückt.

Es ist Aufgabe der Erfindung, eine Andruckrolle-Betätigungsvorrichtung zu schaffen, die sich insbesondere im Hinblick auf deren Verwendung in einem Recorder mit einer auf dem Laufwerkchassis außerhalb des Kassettenbereiches angeordneten Capstanwelle kostengünstig fertigen läßt und mit der sich Reibungsverluste, die die Andruckkraft für die Andruckrolle an die Capstwelle mindern, verringern lassen.

Diese Aufgabe wird gemäß der Erfindung durch die im Anspruch 1 aufgeführten Merkmale gelöst. Vorteilhafte Weiterbildungen der Erfindung sind in den Unteransprüchen gekennzeichnet.

Zur Betätigung der Andruckrolle in und außer Eingriff mit der Capstanwelle in einem Kassettenrecorder, insbesondere in einem Videorecorder mit einer auf dem Laufwerkchassis außerhalb des Kassettenbereiches angeordneten Capstanwelle, ist eine Betätigungsvorrichtung vorgesehen, die im wesentlichen einen die Andruckrolle drehbar lagernden Andruckhebel, eine der Betätigung des Andruckhebels dienende aus mindestens einem Hebel bestehende mit der Betätigungsseite des Andruckhebels verbundene Antriebsvorrichtung, die drehbar um eine ortsfest am Chassis angeordnete Schwenkachse gelagert ist, sowie eine auf einer zur Andruckrolle parallelen Achse drehbar gelagerte zweite Rolle, im folgenden Liftrolle genannt, enthält, welche mit einer in vorgegebener Höhe und Lage am Chassis angeordneten Führung in Eingriff gelangt, wenn die Andruckrolle in die Arbeitsstellung geschwenkt wird, wobei ein an der Liftrolle im Prinzip konisch geformter Bereich durch die Einwirkung der Führung auf denselben eine Anhebung des Andruckhebels bewirkt.

Die Betätigungsvorrichtung bildet eine mechanische Einheit. Der Transport der Andruckrolle zwischen ihrer Ruhe- und ihrer Arbeitsstellung bzw. umgekehrt erfolgt durch Verschwenken der Betätigungsvorrichtung um die Schwenkachse der Antriebsvorrichtung. Durch das vorgenannte Zusammenwirken der Liftrolle mit der Führung wird der Schwenkbewegung eine Hubbewegung senkrecht zum Chassis überlagert, so daß die Andruckrolle für ihr Einschwenken in die zuvor erwähnte Kassettenausnehmung abgesenkt und für ihren Eingriff mit Capstanwelle und Aufzeichnungsträger entsprechend angehoben wird. Damit ist der Vorteil verbunden, daß in der Arbeitsstellung der Andruckrolle eine Reibung bewirkende Chassisberührung der Betätigungsvorrichtung vermieden wird, die sonst die Einwirkung eines Kraftspeichers auf die Andruckrolle zum Andrücken derselben an die Capstanwelle erheblich beeinträchtigen würde.

Die mit der Liftrolle die Anhebung der Betätigungsvorrichtung bewirkende Führung wird in vorteilhafter Weise mit einer Stützvorrichtung für die Andruckrolle kombiniert. Eine derartige Stützvorrichtung, mit der die Achse der Andruckrolle beim Erreichen ihrer Arbeitsstellung in Eingriff gebracht wird, begrenzt die Andruckrolle hinsichtlich ihrer Höhenlage, beeinflußt ihre Parallelität zur Capstanwelle und gewährleistet eine gleichmäßige Verteilung der in dem Kraftspeicher gespeicherten Kraft beim Andrücken der Andruckrolle an die Capstanwelle. Dadurch wird eine exaktere, für eine konstante Höhenlage des anzutreibenden Aufzeichnungsträgers maßgebliche Parallelführung, insbesondere beim Suchlauf-rückwärts erzielt.

Mit der erfindungsgemäßen Betätigungsvorrichtung ist ferner der Vorteil verbunden, daß der Kraftspeicher auf einfache Weise realisierbar ist, indem ein in der Betätigungsvorrichtung angeordnetes, zwei zueinander verstellbare Hebelarme verbindendes Federelement mittels eines Anschlages für einen der beiden Hebelarme vorgespannt gehalten wird, sodaß zur Kraftspeicherung keine äußere Kraft benötigt wird. Sobald die Andruckrolle mit der Capstanwelle in Eingriff gelangt bzw. an diese angedrückt wird, wird als Reaktion darauf der Hebelarmanschlag aufgehoben, so daß die Kraft aus dem vorgespannten Federelement voll auf die Capstanwelle einwirken kann.

Betätigungs- und Stützvorrichtung zeichnen sich durch die Verwendung geringeren Aufwand erfordernder Mittel aus. Aufgrund der Verwendung einfacher Mittel ist auch der manuelle Aufwand für die Montage von Betätigungs- und Stützvorrichtung gering.

Die Erfindung wird im folgenden in einem Ausführungsbeispiel anhand der Figuren näher erläutert. In der Zeichnung zeigen
- Fig. 1a: im verkleinerten Maßstab schematisch ein Lauf werkchassis für eine bekannte Bandkassette in Draufsicht,
- Fig. 1b: in Draufsicht schematisch dasselbe Laufwerkchas sis mit dem aus der Bandkassette ausgefädelten Aufzeichnungsträger,
- Fig. 2: in Draufsicht und vergrößertem Maßstab schema tisch einen Teilbereich desselben Laufwerkchassis mit einer Betätigungsvorrichtung für die sich in Ruhestellung befindende Andruckrolle,
- Fig. 3a: den Teilbereich nach Fig. 2 mit einer ersten Zwischenstellung der Andruckrolle,
- Fig. 3b: eine zweite Zwischenstellung der Andruckrolle,
- Fig. 3c: den Teilbereich nach Fig. 2 mit einer dritten Zwischenstellung der Andruckrolle,
- Fig. 4a: den Teilbereich nach Fig. 2 mit der Arbeitsstel lung der Andruckrolle,
- Fig. 4b: eine erste Schnittdarstellung wesentlicher Ele mente von Fig. 4a,
- Fig. 4c: einen Teilbereich der Schnittdarstellung nach Fig. 4b in vergrößertem Maßstab,
- Fig. 4d: eine zweite Schnittdarstellung wesentlicher Ele mente von Fig. 4a.

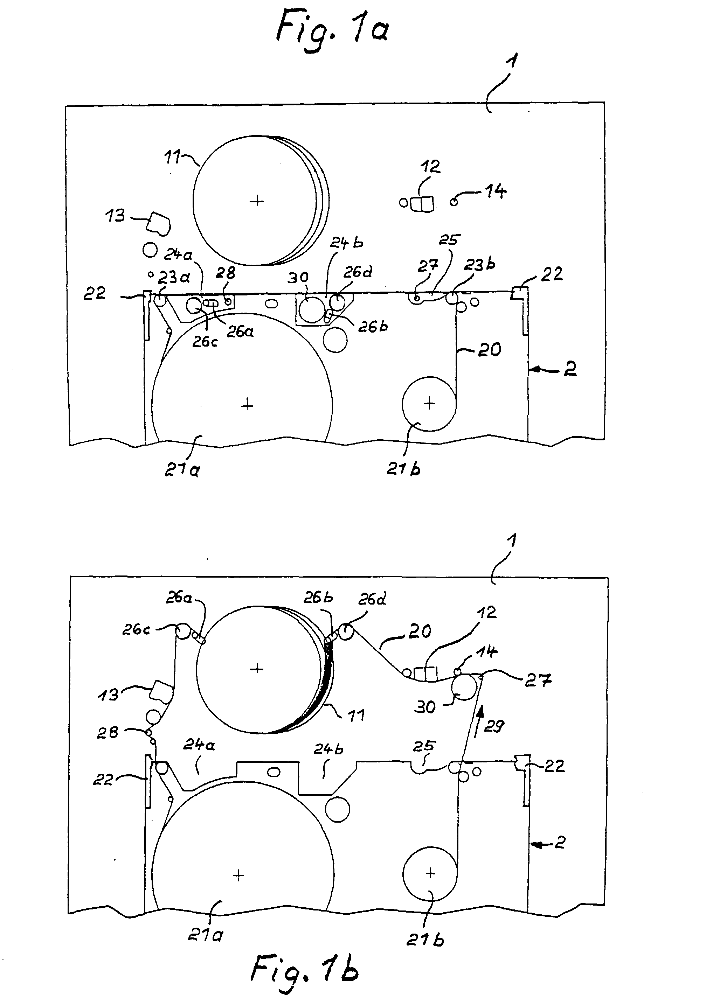

Fig. 1a und 1b zeigen im verkleinerten Maßstab schematisch ein beispielhaftes Laufwerk mit einem Chassis 1. Auf dem Chassis 1 sind in an sich bekannter Weise angeordnet: eine drehbare Kopftrommel 11 zur Schrägspuraufzeichnung und/oder-wiedergabe und stationäre Köpfe 12, 13 zur Längsspuraufzeichnung und/oder-wiedergabe von Signalen mit einem bandförmigen, in einer Kassette mit bekannten Aufbau gelagerten Aufzeichnungsträger sowie eine Capstanwelle 14 zum Antrieb des Aufzeichnungsträgers mittels einer Andruckrolle 30. Die Capstanwelle 14 ist außerhalb des für die Kassette vorgesehenen Chassisbereiches angeordnet. Eine derartige Kassette 2 bekannten Aufbaues mit einem Aufzeichnungsträger 20 befindet sich in Betriebsstellung auf dem Chassis 1, in der die beiden Bandwickel 21a, 21b des Aufzeichnungsträgers 20 jeweils mit einem nicht dargestellten Antriebsdorn des Laufwerkes in Eingriff sind und die Bandschutzklappe 22 der Kassette 2 aufgeschwenkt ist.

Fig. 1a zeigt dabei das Laufwerk mit der Kassette 2 im Stop- oder Standby-Betrieb und Fig. 1b das Laufwerk mit der Kassette 2 im Spielbetrieb des Recorders.

Die vordere Kassetten-Gehäusewandung, die sonst durch die Bandschutzklappe 22 verdeckt ist und an der, wie in Fig. 1a angedeutet ist, der Aufzeichnungsträger 20 zwischen den beiden Kassetten-Umlenkrollen 23a, 23b anliegt, weist Aussparungen 24a; 24b; 25 auf, in die, wie Fig. 1a zeigt, Fädelelemente 26a,28; 26b; 27 sowie mit den Fädelementen 26a; 26b gekoppelte Bandumlenkrollen 26c; 26d eingetaucht sind. Die Fädelemente 26a; 26b mit ihrer jeweiligen Bandumlenkrolle 26c; 26d sind auch als Fädelwagen bekannt. Mit ihnen ist der Aufzeichnungsträger 20 um die Kopftrommel 11 schlingbar. Sie sind über die Laufwerk-Betriebsartensteuermechanik vom Fädelmotor antreibbar. Laufwerk-Betriebsartensteuermechanik und Fädelmotor sind nicht dargestellt, da sie für die Erfindung nicht wesentlich sind. Das Fädelelement 28 ist Teil eines Bandzugreglers. Wie ferner in Fig. 1a dargestellt, wird der durch die Aussparung 24b freie Raum auch zur Unterbringung der Andruckrolle 30 während ihrer Ruhestellung genutzt.

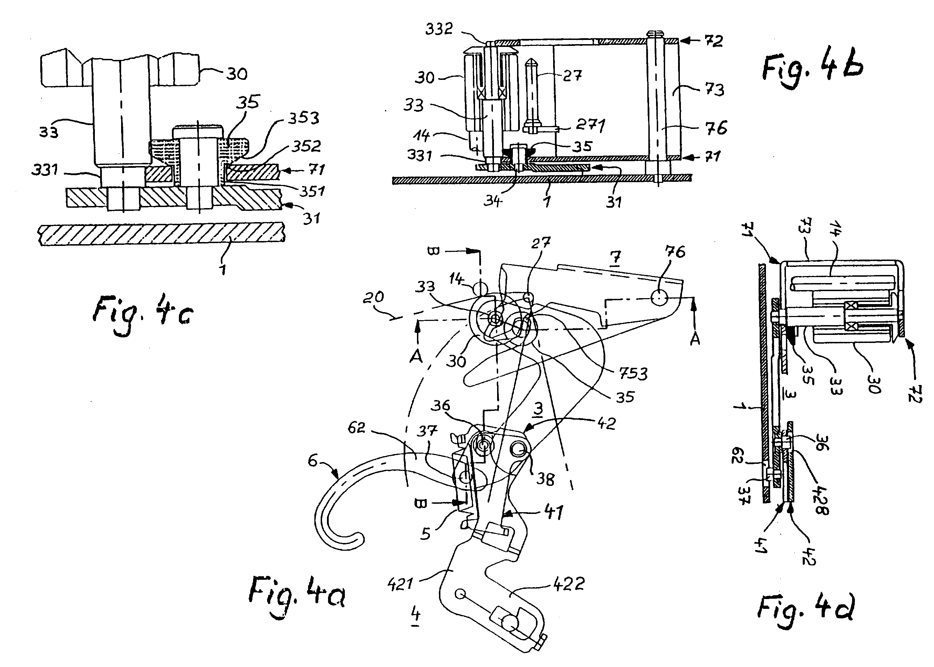

Wie in Fig. 1b dargestellt, ist für den Spielbetrieb des Recorders der Aufzeichnungsträger 20 mittels der Fädelelemente 26a, 26b, 27, 28 aus der Kassette 2 ausgefädelt und an die rotierende Kopftrommel 11 sowie an die stationären Köpfen 12, 13 gelegt. Wie ferner in Fig. 1b dargestellt, befindet sich Andruckrolle 30 in ihrer Arbeitsstellung. Dabei wird sie durch Einwirkung eines Kraftspeichers (Fig. 4a) zusammen mit dem Aufzeichnungsträger 20 zum Antrieb desselben gegen die rotierende Capstanwelle 14 gedrückt. Mit einem Pfeil 29 ist die Antriebsrichtung des Aufzeichnungsträgers 20 im Suchlaufbetrieb "rückwärts" angedeutet. Die jeweiligen Betätigungen von Andruckrolle 30, Fädelelemente 27, 28 und der Fädelwagen (beim Ein- oder Ausschalten des Recorder-Spielbetriebes) erfolgen in bekannter Reihenfolge.

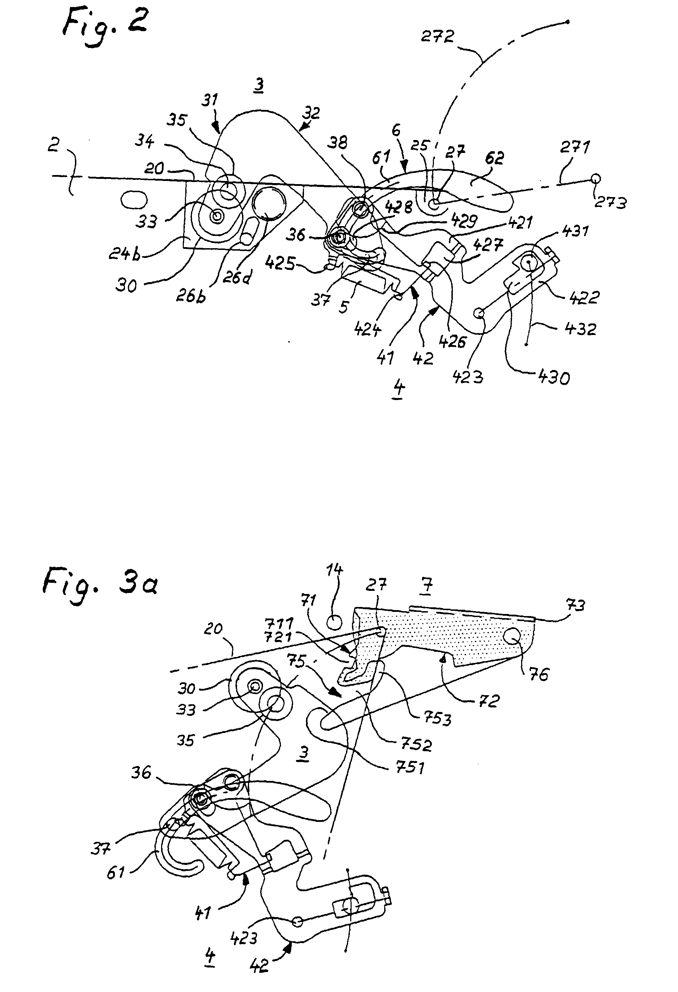

Zur Betätigung der Andruckrolle 30 ist eine Betätigungsvorrichtung vorgesehen. Sie ist auf einer senkrecht zum Chassis 1 ortsfesten Schwenkachse 423 (Fig. 2) drehbar gelagert und bildet mit der Andruckrolle 30 eine mechanische Einheit. Die Betätigung der Andruckrolle 30 zwischen ihrer Ruhe- und ihrer Arbeitsstellung bzw. umgekehrt erfolgt durch Verschwenken der Betätigungsvorrichtung um die Schwenkachse 423, wobei zwischen Ruhe- und Arbeitsstellung der Schwenkbewegung der Betätigungsvorrichtung erfindungsgemäß eine leichte Hubbewegung senkrecht zum Chassis 1 in der Weise überlagert wird, daß diese für das Einschwenken der Andruckrolle 30 in die Ausnehmung 24b abgesenkt und für den Eingriff der Andruckrolle 30 mit der Capstanwelle 14 entsprechend angehoben wird.

Die Betätigungsvorrichtung wird nachfolgend anhand der Figuren 2-4d beschrieben. In den Figuren 1a-4d sind übereinstimmende Gegenstände mit übereinstimmenden Bezugszeichen versehen.

Fig. 2 zeigt die Betätigungsvorrichtung mit der Andruckrolle 30 in einer Stellung, die der Ruhestellung gemäß Fig. 1a. entspricht. Dabei ist die Andruckrolle 30, die eine erste an der Betätigungsvorrichtung drehbar angeordnete Rolle ist, in der dem rechtsseitigen Fädelwagen mit Fädelelement 26b und Bandumlenkrolle 26d zugeordneten Kassettenaussparung 24b eingetaucht. Das Fädelelement 27 ist in die Kassettenaussparung 25 eingetaucht. Wie anhand der Stellung des Fädelelementes 27 gemäß Fig. 1b, Fig. 3a-3c und Fig. 4a ersichtlich, ist mit dem Fädelelement 27 der Aufzeichnungsträger 20 zur Capstanwelle hin bewegbar. Hierzu ist ein das Fädelelement 27 tragender Hebel 271 (Fig. 4b) um eine zum Chassis 1 ortsfeste Achse 273 verschwenkbar, der durch die erwähnte Laufwerk-Betriebsartensteuermechanik betätigbar ist. Der entsprechende Schwenkbereich für das Fädelelement 27 ist durch eine strichpunktierte Linie 272 angedeutet.

Die Betätigungsvorrichtung enthält als wesentliche Bestandteile einen die Andruckrolle 30 sowie eine Liftrolle 35 lagernden Andruckhebel 3 und eine Antriebsvorrichtung 4, im wesentlichen bestehend aus einem ersten 41 und zweiten Hebel 42, im folgenden Zwischenhebel 41 und Antriebshebel 42 genannt, zum Betätigen des Andruckhebels 3. Die Betätigungsvorrichtung liegt auf dem Chassis 1 mit dem Andruckhebel 3 auf. Der Zwischenhebel 41, mit dem die mechanische Verbindung der Antriebsvorrichtung 4 mit dem Andruckhebel 3 hergestellt wird, ist, wie in der Schnittdarstellung gemäß Fig. 4d dargestellt, bezüglich der Höhenlage zwischen Andruckhebel 3 und Antriebshebel 42 angeordnet.

Der Antriebshebel 42 weist zwei winklig zueinander verlaufende Hebelarme 421, 422 auf, im folgenden erster und zweiter Antriebshebelarm 421; 422 genannt. Sie sind in ihrem Scheitelpunkt drehbar um die am Chassis 1 angeordnete Schwenkachse 423 gelagert. Der zweite Antriebshebelarm 422 bildet die Betätigungsseite der Betätigungsvorrichtung, wobei deren Betätigung durch einen schwenkbaren, von der erwähnten Laufwerk-Betriebsartensteuermechanik antreibbaren Antriebsbolzen 431 erfolgt, der in eine im Endbereich des zweiten Antriebshebelarms 422 vorgesehene Öffnung 430 eingreift. Der entsprechende Betätigungs- bzw. Schwenkbereich des Antriebsbolzens 431 ist durch eine durchgehende Linie 432 angedeutet.

Der Andruckhebel 3 weist zwei Hebelarme 31, 32 auf, im folgenden erster und zweiter Andruckhebelarm 31; 32 genannt, die ebenfalls winklig zueinander verlaufen. Am Ende des ersten Andruckhebelarms 31 ist auf demselben auf einer senkrechten Achse 33 die Andruckrolle 30 drehbar gelagert. Am Ende des zweiten Andruckhebelarms 32, der die Betätigungsseite des Andruckhebels 3 bildet, ist ein sich senkrecht nach unten erstreckender Bolzen 37 angeordnet. Der Bolzen 37 ist mit einer schlitzartigen Führung 61 in Eingriff, die im wesentlichen durch einen Teil konstanter Breite einer im Chassis 1 vorgesehenen Ausnehmung 6 gebildet wird. Der andere, sich der Führung 61 anschließende Teil 62 der Ausnehmung 6 ist keulenförmig. Lage und Verlauf der Ausnehmung 6 sind vorgegeben. Ausgehend von der in Fig. 2 dargestellten Position des Zapfens 37 ist der Verlauf der Ausnehmung 6 einer rechtsgängig auslaufenden Spirale ähnlich.

Zwischenhebel 41, zweiter Andruckhebelarm 32 und erster Antriebshebelarm 421 überlappen sich teilweise. Von ihrem jeweiligen Scheitelpunkt aus betrachtet, erstrecken sich dabei in der Ruhestellung gemäß Fig. 2 der zweite Andruckhebelarm 32 zum ersten Antriebshebelarm 421 und der erste Andruckhebelarm 31 zum zweiten Antriebshebelarm 422 annähernd in jeweils entgegengesetzter Richtung.

Zwischen dem Scheitelpunkt beider Andruckhebelarme 31, 32 und dem Bolzen 37 ist der Andruckhebel 3 durch eine senkrechte Achse 36 mit dem Zwischenhebel 41 verbunden. Die Achse 36 bildet einen Drehpunkt, um den der Andruckhebel 3 während seiner Betätigung gegenüber der Antriebsvorrichtung 4 bzw. dem Zwischenhebel 41 verschwenkbar ist. Über die Achse 36 werden auf den Andruckhebel 3 sowohl Antriebskraft zum Betätigen desselben zwischen Ruhe- und Arbeitsstellung der Andruckrolle 30 als auch die Kraft eines Kraftspeichers zum Andrücken der Andruckrolle 30 an die Capstanwelle 14 übertragen. Die Achse 36, für die im ersten Antriebshebelarm 421 eine langlochartige Ausnehmung 428 vorgesehen ist, ist vorzugsweise fest im zweiten Andruckhebelarm 32 angeordnet. Zur Reibungsverminderung zwischen Andruckhebel 3 und Zwischenhebel 41 ist, wie in Fig. 4d dargestellt, auf dem zweiten Andruckhebelarm 32 der Bereich um die Achse 36 erhaben geformt.

Der Zwischenhebel 41 ist durch eine ebenfalls senkrechte Achse 38 mit dem Antriebshebel 42 bzw. mit dem Endbereich des zweiten Antriebshebelarms 422 verbunden. Die Achse 38 ist vorzugsweise fest im ersten Antriebshebelarm 421 angeordnet. Mit dem Zwischenhebel 41 wird eine zwischen diesem und dem Antriebshebel 42 angeordnete Feder 5 vorgespannt gehalten und gespannt, die als Kraftspeicher zum Andrücken der Andruckrolle 30 an die Capstanwelle 14 (gemäß Fig. 4a) vorgesehen ist.

Der Zwischenhebel 41 bildet ein langgestrecktes Viereck, das sich annähernd parallel zum ersten Antriebshebelarm 421 zur Schwenkachse 423 erstreckt und vorzugsweise etwa halb so lang wie dieser ist. Die beiden Achsen 36, 38 bilden dabei die beiden dem Endbereich des ersten Antriebshebelarms 421 zugeordneten Eckpunkte, während die beiden gegenüberliegenden Eckpunkte durch den Angriffspunkt 424 der Feder 5 am Zwischenhebel 41 und einen Anschlag des Zwischenhebels 41 am ersten Antriebshebelarm 421 gebildet werden, wobei Angriffspunkt 424 und Achse 38 sowie Anschlag und Achse 36 sich jeweils diagonal gegenüberliegen. Der Anschlag, durch den die Feder 5 vorgespannt gehalten ist, wird mit einem am Zwischenhebel 42 abgewinkelten Teil 426 gebildet, das in eine im ersten Antriebshebelarm 421 vorgesehene Ausnehmung 427 eingreift und dabei den Zwischenhebel 41 am ersten Antriebshebelarm 421 abstützt. Der andere Angriffspunkt der Feder liegt seitlich der Achse 36 an einer seitwärts gerichteten Verlängerung 425 am Endbereich des ersten Antriebshebelarms 421. Die durch den vorgenannten Anschlag vorgespannte Feder 5 bewirkt, daß Zwischenhebel 41 und Antriebshebel 42 ein in sich starres Hebelsystem bilden.

Die Achse 38, durch die Zwischenhebel 41 und Antriebshebel 42 miteinander verbunden sind, bildet ebenfalls einen Drehpunkt. Um diesen Drehpunkt ist der Zwischenhebel 41 gegenüber dem ersten Antriebshebelarm 421 leicht verschwenkbar, wenn die Andruckrolle 3 in Eingriff mit der Capstanwelle 14 gelangt. Zur Reibungsverminderung zwischen Antriebshebel 42 und Zwischenhebel 41 ist auf dem ersten Antriebshebelarm 421 ein Bereich um diese Achse 38 erhaben geformt. Dieser Bereich, der sich nach unten erstreckt, ist durch eine kreisförmige Linie 429 angedeutet.

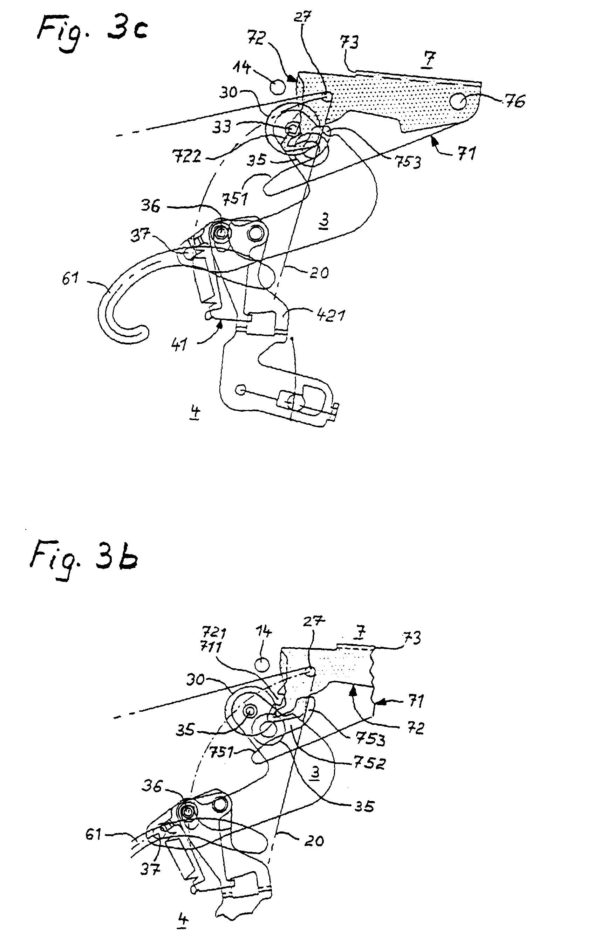

Zwischen dem Scheitelpunkt beider Andruckhebelarme 31, 32 und der Andruckrolle 3 ist auf einer zur Achse 33 der Andruckrolle 30 parallelen Achse 34 die Liftrolle 35 drehbar gelagert. Wie insbesondere anhand der Schnittdarstellung gemäß Fig. 4c ersichtlich, weist die Liftrolle 35 einen ersten bzw. unteren, zylindrisch geformten Bereich 351 und einen sich diesem anschließenden zweiten Bereich 353 auf, der unten als Flansch 352 und darüber im wesentlichen konisch mit zum oberen Rand zunehmenden Durchmesser geformt ist. Mit dem konisch geformten zweiten Bereich 353 wird die erwähnte Anhebung der Betätigungsvorrichtung bewirkt, wenn beim Schwenken derselben in die Arbeitsstellung (gemäß Fig. 4a) die Liftrolle 35 mit einer zweiten, in vorgegebener Höhenlage über dem Chassis 1 angeordneten Führung 75 (Fig. 3a-4a) in Eingriff gelangt.

Die Funktion der soweit beschriebenen Betätigungsvorrichtung wird anhand der Figuren 3a - 4c erläutert bzw. ergibt sich aus der weiteren Beschreibung.

Fig. 3a bis Fig. 3c zeigen je eine Stellung der Betätigungsvorrichtung zwischen Ruhe- und Arbeitsstellung der Andruckrolle 30, wobei der Aufzeichnungsträger 20 mittels des Fädelelmentes 27 vor der Capstanwelle 14 aufgespannt ist. Die jeweiligen Stellungen des Andruckhebels 3 zur Antriebsvorrichtung 4 gemäß Fig. 2 bis Fig. 3b veranschaulichen dabei die steuernde Einwirkung der Führung 61 über den Bolzen 37 auf den Bewegungsablauf des Andruckhebels 3 um die mit dem Zwischenhebel 41 gemeinsame Achse 36, welche die vorgenannte Verbindung des Andruckhebels 3 mit der Antriebsvorrichtung 4 herstellt.

In Bezug auf Fig. 3a zeigen Fig. 3b und Fig. 3c die Betätigungsvorrichtung näher an der Arbeitsstellung der Andruckrolle 30. Die Arbeitsstellung der Andruckrolle 30 ist in Fig. 4a dargestellt. In der Stellung der Betätigungsvorrichtung gemäß Fig. 3c sind sowohl die Liftrolle 35 als auch die Andruckrolle 30 bzw. deren Achse 33 mit einer Stützvorrichtung 7 in Eingriff.

Die Stützvorrichtung 7ist um eine zum Chassis 1 ortsfeste senkrechte Achse 76 verschwenkbar, wobei der Schwenkbereich durch zwei nicht dargestellte Anschläge am Chassis 1 begrenzt ist. Die durch die beiden Anschläge erreichbaren Endstellungen der Stützvorrichtung 7 sind in Fig. 3b bzw. Fig. 4a dargestellt. Die Stützvorrichtung 7weist einen ersten, unteren Stützhebelarm 71 und einen zweiten, oberen Stützhebelarm 72 (mit Punktmarkierung) auf, die durch im wesentlichen dreieckige, zum Chassis 1 parallele, durch einen senkrechten Steg 73 (Fig. 4b und Fig. 4d) fest miteinander verbundene Streifen gebildet werden. Beiden Stützhebelarmen 71, 72 ist je eine feste Höhenlage über dem Chassis 1 zugeordnet. An ihrem jeweiligen Hebelende bzw. an ihrer jeweiligen Seite, die der Achse 76 der Stützvorrichtung 7 gegenüberliegen und nachfolgend Stirnseiten genannt werden, weisen beide Stützhebelarme 71; 72 je eine Aussparung 711; 721 auf. Mit diesen gelangt die Achse 33 der Andruckrolle 30 in Eingriff, wenn die Betätigungsvorrichtung von ihrer Stellung gemäß Fig. 3b in ihre Stellung gemäß Fig. 3c geschwenkt wird.

Die beiden Aussparungen 711, 721 sind prismenartig und so zueinander ausgebildet, daß sie in ergänzender Weise die Achse 33 der Andruckrolle 30 in einem Winkel von mehr als 180 Grad umschließen können, was sowohl eine Fixierung der Andruckrolle 30 parallel zur Capstanwelle 14 bewirkt als auch sehr geringe Reibungs- bzw. Berührungsflächen der Aussparungen 711, 721 mit der Achse 33 zur Folge hat. An den Enden der Achse 33 der Andruckrolle 30 ausgebildete Absätze 331, 332 (Fig. 4b), die für den vorgenannten Eingriff der Achse 33 der Andruckrolle 30 dem Abstand der beiden Aussparungen 711, 721 angepaßt sind, sorgen dabei auch für eine Fixierung der Anhebung der Betätigungsvorrichtung über dem Chassis 1, die mittels der Liftrolle 35 und der zweiten Führung 75 bewirkt wird. Die zweite Führung 75 ist im unteren Stützhebelarm 71 ausgebildet.

Die zweite Führung 75 bildet außerdem eine zweite Führung zur Steuerung des Bewegungsablaufs des Andruckhebels 3 um die mit dem Zwischenhebel 41 gemeinsame Achse 36. Mit der ersten Führung 61 im Chassis 1 wird der Bewegungsablauf des Andruckhebels 3 um die mit dem Zwischenhebel 41 gemeinsame Achse 36 zwischen seiner Stellung gemäß Fig. 2 und seiner Stellung gemäß Fig. 3b bestimmt.

Die zweite Führung 75 ist in einem vorgegebenen Abstand von den Aussparungen 711, 721 an der Stirnseite des unteren Stützhebels 71 ausgebildet und derart gestaltet, daß sie vorzugsweise drei Führungsbereiche 751, 752, 753 aufweist. Der erste Führungsbereich 751, mit dem die Liftrolle 35 mit ihrem konisch geformten Bereich 353 (Fig. 4c) beim Schwenken in Richtung der Arbeitsstellung zuerst in Eingriff gelangt, wird durch eine Einführungsnase bzw. durch ihren capstanseitigen Rand gebildet. Der Anfang der Einführungsnase bildet den Dreieckspunkt, der jener Dreiecksseite gegenüberliegt, die dem Steg 73 zugeordnet ist. Der zweite und dritte Führungsbereich 752, 753 werden durch einen sich dem ersten Führungsbereich 751 anschließenden zweiteiligen Schlitz konstanter Breite und vorgegebener Länge gebildet, der im unteren Stützhebel 71 um die Aussparungen 711, 721 angeordnet ist. Der zweite Führungsbereich 752 erstreckt sich näherungsweise parallel zu der Dreieckseite, die von der Einführungsnase zur Achse 76 der Stützvorrichtung 7 verläuft. Der dritte Führungsbereich 753, der einen bogenartigen Verlauf aufweist, ist zu der dem Steg 73 zugeordneten Dreiecksseite gerichtet und dem Achsabstand von Andruckrolle 30 und Liftrolle 35 entsprechend angepaßt.

Im ersten Führungsbereich 751, mit dem die vorzugsweise zwischen den erwähnten beiden Anschlägen frei bewegliche Stützvorrichtung 7 in ihre Endstellung gemäß Fig. 3b gebracht wird, erfolgt die erwähnte Anhebung der Betätigungsvorrichtung. Durch Abwälzen der Liftrolle 35 mit ihrem konisch geformten zweiten Bereich 353 am capstanseitigen Rand der Einführungsnase wird die Betätigungsvorrichtung soweit angehoben, daß die Liftrolle 35 bei Erreichen ihrer Stellung gemäß Fig. 3b mit ihrem Flansch 352 (Fig. 4c) in Eingriff gelangt, so daß die Betätigungsvorrichtung die Höhenlage gemäß Fig. 4b - 4d über dem Chassis 1 erreicht.

In der Andruckhebelstellung gemäß Fig. 3b, mit der der Übergang in den zweiten Führungsbereich 752 angedeutet ist, berührt die Achse 33 der Andruckrolle 30 noch nicht die Stützhebel 71, 72. Das In-Eingriff-Gelangen der Achse 33 der Andruckrolle 30 mit den Aussparungen 711, 721 geschieht, wenn der Andruckhebel 3 von der Stellung gemäß Fig. 3b in die Stellung gemäß Fig. 3c bewegt wird. Der gegenüber dem unteren Stützhebel 71 überstehende Rand 722 an der Stirnseite des oberen Stützhebelarms 72, den die Achse 33 der Andruckrolle 30 beim Schwenken in Richtung der Arbeitsstellung dabei zunächst berührt, führt die Achse 33 der Andruckrolle 30 bei ihrer zu den Aussparungen 711, 721 gerichteten Bewegung. Das Gleiten der Achse 33 der Andruckrolle 30 in die Aussparungen 711, 721 erfolgt, wenn der Andruckhebel 3 die Stellung gemäß Fig. 3c erreicht. Die Aussparungen 711, 721 sind derart geformt und zum zweiten Führungsbereiches 752 angeordnet, daß das Gleiten der Achse 33 der Andruckrolle 30 in die Aussparungen 711, 721 sowie aus diesen heraus (beim Schwenken der Betätigungsvorrichtung in Richtung der Ruhestellung gemäß Fig. 2) leichtgängig erfolgt.

Im zweiten Führungsbereich 752 sowie im dritten Führungsbereich 753, mit dem der weitere Bewegungsablauf der Andruckrolle 30 an die Capstanwelle 14 bestimmt wird, liegt die Liftrolle 35 beidseitig mit ihrem Flansch 352 auf dem unteren Stützhebelarm 71 auf. Die Breite des Schlitzes ist so gewählt, daß dieser einen geringen Spielraum zum zylindrischen Bereich 351 (Fig. 4c) der Liftrolle 35 aufweist. In der Andruckhebelstellung gemäß Fig. 3c, mit der der Übergang in den dritten Führungsbereich 753 angedeutet ist, berührt die Andruckrolle 30 noch nicht den Aufzeichnungsträger 20.

Fig. 4a zeigt die Betätigungsvorrichtung mit der Andruckrolle 30 in einer Stellung, die der Arbeitsstellung gemäß Fig. 1b entspricht. Fig. 4b stellt einen Teilschnitt entlang der Schnittlinie A-A dar und Fig. 4d einen Teilschnitt entlang der Schnittlinie B-B. Fig. 4c zeigt einen die Liftrolle 35 enthaltenden Teilbereich von Fig. 4b in vergrößerter Darstellung.

In dieser Stellung sind Andruckrolle 30, Aufzeichnungsträger 20 und Capstanwelle 14 miteinander im Eingriff, wobei durch Einwirkung der in der Feder 5 gespeicherten Kraft die Andruckrolle 30 an die Capstanwelle 14 gedrückt wird.

Das In-Eingriff-Gelangen der Andruckrolle 30 mit der Capstanwelle 14 erfolgt, wenn der Andruckhebel 3 von seiner Stellung gemäß Fig. 3c in seine Stellung gemäß Fig. 4a bewegt wird. Der keulenförmige Teil 62 der Ausnehmung 6, der dabei vom Bolzen 37 durchfahren wird, ist derart gestaltet, daß durch ihn die Bewegung des Andruckhebels 3 nicht beeinflußt wird. Das gleiche gilt auch für die umgekehrte Bewegungsrichtung des Andruckhebels 3.

Da ab dem Zeitpunkt des In-Eingriff-Gelangens die Antriebsvorrichtung 4 noch weiter angetrieben wird, bis diese ihre Stellung gemäß Fig. 4a erreicht hat, und die Andruckrolle 30 der Capstanwelle 14 nicht ausweichen kann, muß der Andruckhebel 3 eine Schwenkbewegung um die Achse 33 der Andruckrolle 30 ausführen. Hierdurch wird dem Zwischenhebel 41, der sonst mit dem Antriebshebel 42 ein starres Hebelsystem bildet, die bereits erwähnte Schwenkbewegung um die mit dem Antriebshebel 42 gemeinsame Achse 38 aufgezwungen. Dadurch kommt der Zwischenhebel 41 außer Anschlag am Andruckhebelarm 421, so daß die durch denselben Anschlag vorgespannte Feder 5 mit der in ihr gespeicherten Kraft und dem Kraftanteil, der sich durch die aufgezwungene Schwenkbewegung des Zwischenhebels 41 um die mit dem Antriebshebel 42 gemeinsame Achse 38 ergibt, auf die Capstanwelle 14 einwirkt. Aufgrund der geringen Berührungsflächen innerhalb der Betätigungsvorrichtung sowie der Liftrolle 35 mit der Stützvorrichtung 7und der Achse 33 der Andruckrolle 30 mit der Stützvorrichtung 7 sind dabei lediglich geringfügige Reibungskräfte zu überwinden.

Die Stützvorrichtung 7 sowie der Andruckhebel 3 und die Hebel 41, 42 der Antriebsvorrichtung 4 lassen sich kostengünstig aus gestanzten Blechteilen fertigen.

Die Erfindung ist insbesondere für Videorecorder geeignet, bei denen die Capstanwelle auf dem Laufwerkchassis außerhalb des Kassettenbereiches angeordnet ist.

## Patentansprüche

1. Recorder mit einer Betätigungsvorrichtung für eine Andruckrolle (30) in und außer Eingriff mit einer Capstanwelle (14) in einem Gerät zur Informationsaufzeichnung und/oder-wiedergabe, insbesondere in einem Videorecorder mit einer auf dessen Laufwerkchassis (1) außerhalb des Kassetten-Bereiches angeordneten Capstanwelle (14), wobei der Andruckrolle (30) in der Arbeitsstellung eine höhere Lage über dem Laufwerkchassis (1) zugeordnet ist als in deren Ruhestellung, **dadurch gekennzeichnet**, daß die Betätigungsvorrichtung einen die Andruckrolle (30) lagernden Andruckhebel (3), der in der Arbeitsstellung mittels einer auf ihn einwirkenden Kraft eines Kraftspeichers die Andruckrolle (30) gegen die Capstanwelle (14) drückt, sowie eine aus mindestens einem Hebel bestehende, drehbar mit der Betätigungsseite des Andruckhebels (3) verbundene betätigbare Antriebsvorrichtung (4) enthält, welche um eine senkrechte, ortsfest am Chassis (1) angeordnete Schwenkachse (423) verschwenkbar ist, und daß eine erste, zum Chassis (1) ortsfeste Führung (61) und eine zweite, gegenüber der ersten höher angeordnete Führung (75) vorgesehen sind, mit welchen die Schwenkbewegung der Antriebsvorrichtung (4) um die Schwenkachse (423) in eine entsprechende Schwenkbewegung von Andruckhebel (3) und Andruckrolle (30) umsetzbar ist, wobei mittels einer Liftrolle (35), die auf dem Andruckhebel (3) der Betätigungsvorrichtung auf einer zur Achse (33) der Andruckrolle (30) parallelen Achse (34) drehbar angeordnet ist und einen zylindrisch geformten ersten sowie einen im wesentlichen konisch geformten mit zum oberen Rand zunehmenden Durchmesser zweiten Bereich (351; 353) aufweist, der Schwenkbewegung eine Hubbewegung senkrecht zum Chassis (1) überlagerbar ist, wenn die Liftrolle (35) mit der zweiten Führung (75) in oder außer Eingriff gelangt.

2. Recorder nach Anspruch 1, **dadurch gekennzeichnet**, daß der Andruckhebel (3) einen ersten Andruckhebelarm (31), auf dem die Andruckrolle (30) und die Liftrolle (35) angeordnet sind, und einen zweiten, zum ersten winklig verlaufenden Andruckhebelarm (32) aufweist, der die Betätigungsseite des Andruckhebels (3) bildet.

3. Recorder nach Anspruch 1 oder 2, **dadurch gekennzeichnet**, daß die Antriebsvorrichtung (4) einen um die Schwenkachse (423) schwenkbaren Antriebshebel (42), der einen ersten und einen zum ersten winklig verlaufenden, die Betätigungsseite der Betätigungsvorrichtung bildenden, zweiten Antriebshebelharm (421; 422) aufweist, und einen ein Viereck bildenden Zwischenhebel (41) umfaßt, der einerseits durch eine Achse (38) drehbar mit dem ersten Antriebshebelarm (421) des Antriebshebels (42) und andererseits durch eine Achse (36) drehbar mit der Betätigungsseite des Andruckhebels (3) verbunden ist.

4. Recorder nach Anspruch 3, **dadurch gekennzeichnet**, daß der Zwischenhebel (41) bezüglich der Höhenlage zwischen dem Andruckhebel (3) und dem Antriebshebel (42) angeordnet ist.

5. Recorder nach Anspruch 3 oder 4, **dadurch gekennzeichnet**, daß mit dem Zwischenhebel (41) eine zwischen diesem und dem ersten Antriebshebelarm (421) angeordnete Feder 5 durch einen Anschlag des Zwischenhebels (41) am ersten Antriebshebelarm (421) vorgespannt ist, die als Kraftspeicher zum Andrücken der Andruckrolle (30) an die Capstanwelle (14) vorgesehen ist.

6. Recorder nach Anspruch 5, **dadurch gekennzeichnet**, daß Zwischenhebel (41) und Antriebshebel (42) durch die vorgespannte Feder (5) ein in sich starres Hebelsystem bilden, solange die Andruckrolle (30) außer Eingriff mit der Capstanwelle (14) ist.

7. Recorder nach einem der Ansprüche 2 - 6, **dadurch gekennzeichnet**, daß die erste Führung (61), durch einen Teil konstanter Breite einer im Chassis (1) vorgesehenen, einer rechtsgängig auslaufenden Spirale ähnlichen Ausnehmung (6) gebildet wird, in welche ein am Ende des zweiten Andruckhebelarms (32) angeordneter Bolzen (37) eingreift.

8. Recorder nach einem der Ansprüche 1 - 7**, dadurch gekennzeichnet**, daß die zweite Führung (75) an einer Stützvorrichtung (7) angeordnet ist, mit der die Andruckrolle (30) in der Arbeitsstellung stützbar ist.

9. Recorder nach Anspruch 8, **dadurch gekennzeichnet**, daß die Stützvorrichtung (7) um eine senkrechte, ortsfest am Chassis (1) angeordnete Schwenkachse (76) verschwenkbar ist und einen ersten, unteren Stützhebelarm (71) und einen zweiten, oberen Stützhebelarm (72) aufweist, die durch im wesentlichen dreieckige, zum Chassis (1) parallele, durch einen senkrechten Steg (73) fest miteinander verbundene Streifen gebildet werden.

10. Recorder nach Anspruch 9, **dadurch gekennzeichnet**, daß die zweite Führung (75) im unteren Stützhebelarm (71) ausgebildet ist.

11. Recorder nach Anspruch 9 oder 10, **dadurch gekennzeichnet**, daß die zweite Führung (75) in einem vorgegebenen Abstand von je einer Aussparung (711; 721) an der Stirnseite beider Stützhebelarme (71; 72), mit denen die Achse (33) der Andruckrolle (30) beim Erreichen der Arbeitsstellung in Eingriff gelangt, an der Stirnseite des unteren Stützhebels (71) derart angeordnet und gestaltet ist, daß sie vorzugsweise drei Führungsbereiche (751, 752, 753) aufweist, wobei der erste Führungsbereich (751), mit dem die Liftrolle (35) mit ihrem konisch geformten Bereich (353) beim Schwenken in Richtung der Arbeitsstellung zuerst in Eingriff gelangt, durch eine Einführungsnase bzw. durch ihren capstanseitigen Rand gebildet wird, während der zweite und dritte Führungsbereich (752, 753) durch einen sich dem ersten Führungsbereich (751) anschließenden zweiteiligen Schlitz konstanter Breite und vorgegebener Länge gebildet werden, der im unteren Stützhebel (71) um die Aussparungen (711, 721) angeordnet ist, wobei der zweite Führungsbereich (752) sich näherungsweise parallel zu der Dreieckseite erstreckt, die von der Einführungsnase zur Achse (76) der Stützvorrichtung (7) verläuft, während der dritte Führungsbereich (753), der einen bogenartigen Verlauf aufweist und dem Achsabstand von Andruckrolle (30) und Liftrolle (35) entsprechend angepaßt ist, zu der dem Steg (73) zugeordneten Dreiecksseite gerichtet ist.

## Claims

1. Recorder having an actuation device for a pinch roller (30) in, and out of, engagement with a capstan spindle (14) in an apparatus for information recording and/or playback, in particular in a video recorder having a capstan spindle (14) arranged on its drive mechanism chassis (1) outside the cassette region, a higher position above the drive mechanism chassis (1) being assigned to the pinch roller (30) in the working position than in its rest position, characterised in that the actuation device comprises a pinch lever (3) which supports the pinch roller (30) and which presses the pinch roller (30) against the capstan spindle (14) in the working position by means of the energy from an energy storage mechanism which acts upon it, and an actuable drive device (4) which comprises at least one lever and is rotatably linked to the actuation side of the pinch lever (3) and which can be swivelled around a vertical swivel shaft (423) arranged in a fixed position on the chassis (1), and in that a first guide (61) which is fixed with respect to the chassis (1) and a second guide (75) arranged higher than the first are provided with which the swivelling movement of the drive device (4) around the swivelling shaft (423) can be converted into a corresponding swivelling movement of pinch lever (3) and pinch roller (30), a lifting movement perpendicular to the chassis (1) being superimposable by means of a lift roller (35) which is rotatably arranged on a shaft (34) parallel to the shaft (33) of the pinch roller (30) on the pinch lever (3) of the actuation device and has a cylindrically shaped first region (351) and an essentially conically shaped second region (353) with a diameter increasing towards the upper edge, when the lift roller (35) engages or disengages with the second guide (75).

2. Recorder according to Claim 1, characterised in that the pinch lever (3) has a first pinch lever arm (31) on which the pinch roller (30) and the lift roller (35) are arranged and a second pinch lever arm (32) which extends at an angle to the first and forms the actuation side of the pinch lever (3).

3. Recorder according to Claim 1 or 2, characterised in that the drive device (4) comprises a drive lever (42) which can be swivelled around the swivelling shaft (423) and which has a first drive lever arm (421) and a second drive lever arm (422) extending at an angle to the first and forming the actuation side of the actuation device, and an intermediate lever (41) which forms a rectangle and which, on the one hand, is rotatably linked to the first drive lever arm (421) of the drive lever (42) by a shaft (38) and, on the other hand, is rotatably linked to the actuation side of the pinch lever (3) by a shaft (36).

4. Recorder according to Claim 3, characterised in that the intermediate lever (41) is arranged, in relation to height, between the pinch lever (3) and the drive lever (42).

5. Recorder according to Claim 3 or 4, characterised in that a spring (5) arranged between the intermediate lever (41) and the first drive lever arm (421) is prestressed with the intermediate lever (41) by a stop on the intermediate lever (41) against the first drive lever arm (421), which spring (5) is provided as an energy storage mechanism for pressing the pinch roller (30) against the capstan shaft (14).

6. Recorder according to Claim 5, characterised in that intermediate lever (41) and drive lever (42) form an inherently rigid lever system as a result of the prestressed spring (5) while the pinch roller (30) is disengaged from the capstan spindle (14).

7. Recorder according to one of Claims 2-6, characterised in that the first guide (61) is formed by a section of constant width of a recess (6) which is provided in the chassis (1) and is similar to a clockwise unwinding spiral and in which a pin (37) arranged at the end of the second pinch lever arm (32) engages.

8. Recorder according to one of Claims 1-7, characterised in that the second guide (75) is arranged on a supporting device (7) with which the pinch roller (30) can be supported in the working position.

9. Recorder according to Claim 8, characterised in that the supporting device (7) can be swivelled around a vertical swivel shaft (76) arranged in a fixed position on the chassis (1) and has a first, lower supporting lever arm (71) and a second, upper supporting lever arm (72), which supporting lever arms are formed by essentially triangular strips parallel to the chassis (1) and permanently linked to one another by a vertical crosspiece (73).

10. Recorder according to Claim 9, characterised in that the second guide (75) is formed in the lower supporting lever arm (71).

11. Recorder according to Claim 9 or 10, characterised in that the second guide (75) is arranged and formed on the end face of the lower supporting lever (71) at a predetermined distance from one recess (711; 721) on each end face of the two supporting lever arms (71; 72) with which the shaft (33) of the pinch roller (30) engages on reaching the working position, in such a way that it preferably has three guide regions (751, 752, 753), the first guide region (751), with which the lift roller (35) first engages by means of its conically shaped region (353) when swivelling in the direction of the working position, being formed by a lead-in lug or by its capstan-side edge, while the second and third guide regions (752, 753) are formed by a two-part slot, adjoining the first guide region (751) of constant width and predetermined length which slot is arranged in the lower supporting lever (71) around the recesses (711, 721), the second guide region (752) extending approximately parallel to the triangular side which runs from the lead-in lug to the shaft (76) of the supporting device (7), while the third guide region (753), which has an arc-shaped path and which is appropriately matched to the shaft spacing of pinch roller (30) and lift roller (35), is directed towards the triangle side assigned to the crosspiece (73).

## Revendications

1. Enregistreur ayant un dispositif d'actionnement pour mettre en contact et hors contact un galet presseur (30) avec un cabestan (14) dans un enregistreur pour l'enregistrement et/ou la reproduction d'informations, en particulier approprié pour un magnétoscope dont le cabestan (14) est placé sur le châssis du mécanisme d'entraînement (1) en dehors de l'espace réservé pour la cassette, et où le galet presseur (30) a une position plus élevée au dessus du châssis du mécanisme d'entraînement (1) en position de travail qu'en position de repos, **caractérisé en ce que**
• le dispositif d'actionnement comprend
- un levier presseur (3) de logement du galet presseur (30), qui applique le galet presseur (30) contre le cabestan (14) au moyen d'une force agissant sur lui et provenant d'un accumulateur de force
- un mécanisme moteur (4) actionnable, composé d'au moins un levier et relié au côté d'actionnement du levier presseur (3) de manière mobile ; ce mécanisme peut pivoter autour d'un axe vertical (423) fixé sur le châssis (1)
• une première glissière de guidage (61) fixée sur le châssis (1) et une deuxième glissière (75) placée plus haut que la première sont prévues. Elles permettent de transformer le mouvement pivotant du mécanisme moteur (4) autour de l'axe de pivotement (423) en un mouvement pivotant correspondant du levier presseur (3) et du galet presseur (30). En outre, un mouvement élévateur perpendiculaire au châssis (1) peut être superposé au mouvement pivotant, au moyen d'un galet élévateur (35), lorsque le galet élévateur (35) est mis en contact ou hors contact avec la deuxième glissière (75). Le galet élévateur (35) est placé de façon à pouvoir pivoter sur un axe (34) sur le levier presseur (3) du dispositif d'actionnement, axe parallèle à l'axe (33) du galet presseur (30) ; il (35) présente une première zone de forme cylindrique et une deuxième zone pratiquement conique, avec un diamètre s'élargissant au niveau du bord supérieur (351, 353).

2. Enregistreur d'après la revendication 1, **caractérisé en ce que** le levier presseur (3) présente un premier bras de levier presseur (31) sur lequel sont placés le galet presseur (30) et le galet élévateur (35), et un deuxième bras de levier presseur (32) décrivant un angle par rapport au premier et formant le côté d'actionnement du levier presseur (3).

3. Enregistreur d'après la revendication 1 ou 2, **caractérisé en ce que** le mécanisme moteur (4) comprend un levier de commande (42) mobile autour de l'axe de pivotement (423), avec un premier bras de levier de commande et un deuxième décrivant un angle par rapport au premier et formant le côté d'actionnement du dispositif d'actionnement (421, 422), et un levier intermédiaire (41) formant un quadrilatère, relié de façon mobile d'un côté au premier bras de levier de commande (421) du levier de commande (42) par un axe (38) et de l'autre côté au côté d'actionnement du levier presseur (3) par un axe (36).

4. Enregistreur d'après la revendication 3, **caractérisé en ce que** le levier intermédiaire (41) est positionné entre le levier presseur (3) et le levier de commande (42) en ce qui conceme sa hauteur.

5. Enregistreur d'après la revendication 3 ou 4, **caractérisé en ce que** avec le levier intermédiaire (41), un ressort 5 placé entre celui-ci et le premier bras de levier de commande (421) est tendu contre le premier bras de levier de commande (421) par un taquet du levier intermédiaire (41) ; ce ressort sert d'accumulateur de force pour appliquer le galet presseur (30) au cabestan (14).

6. Enregistreur d'après la revendication 5, **caractérisé en ce que** le levier intermédiaire (41) et le levier de commande (42) forment par l'intermédiaire du ressort tendu (5) un système de leviers rigide en soi, tant que le galet presseur (30) n'est pas en contact avec le cabestan (14).

7. Enregistreur d'après une des revendications 2 à 6, **caractérisé en ce que** la première glissière (61) est formée par une partie de largeur constante d'un évidement (6) prévu dans le châssis et ressemblant à une spirale dirigée vers la droite, dans laquelle un tenon (37) situé à l'extrémité du deuxième bras de levier presseur (32) s'engrène.

8. Enregistreur d'après une des revendications 1 à 7, **caractérisé en ce que** la deuxième glissière (75) est positionnée au niveau d'un support (7) pouvant supporté le galet presseur (30) en position de travail.

9. Enregistreur d'après la revendication 8, **caractérisé en ce que** le support (7) peut pivoter autour d'un axe (76) fixe et perpendiculaire au châssis (1) et présente un premier bras de levier de support inférieur (71) et un deuxième bras de levier de support supérieur (72) qui sont formés par des lames pratiquement triangulaires, parallèles au châssis (1), reliées fixement l'une à l'autre par une traverse perpendiculaire (73).

10. Enregistreur d'après la revendication 9, **caractérisé en ce que** la deuxième glissière (75) est formée dans le bras de levier de support inférieur (71).

11. Enregistreur d'après la revendication 9 ou 10, **caractérisé en ce que** la deuxième glissière (75) est formée sur le côté frontal du levier de support inférieur (71), à un écart donné de deux évidements (711, 721) situés respectivement sur le côté frontal des deux bras de levier de support (71, 72), dans lesquels l'axe (33) du galet presseur (30) s'insère lorsque la position de travail est atteinte, et construite de façon à présenter de préférence trois zones de guidage (751, 752, 753). La première zone de guidage (751), avec laquelle le galet élévateur (35) avec sa zone conique (353) entre d'abord en contact lors du pivotement vers la position de travail, est formée par un tenon d'introduction ou par son bord du côté du cabestan. Les deuxième et troisième zones de guidage (752, 753) sont formées par une mortaise en deux parties de largeur constante et de longueur donnée, dans le prolongement de la première zone de guidage (751) et placée dans le levier de support inférieur (71) autour des évidements (711, 721). La deuxième zone de guidage (752) s'étend presque parallèlement au côté du triangle allant du tenon d'introduction vers l'axe (76) du support (7). La troisième zone de guidage (753), présentant une allure arquée et adaptée à l'écart de l'axe du galet presseur (30) et du galet élévateur (35) est dirigée vers le côté du triangle attribué à la traverse (73).
